# EUROPÄISCHE PATENTSCHRIFT

(11) **EP 4 107 098 B1**
(45) Veröffentlichungstag und Bekanntmachung des Hinweises auf die Patenterteilung: **02.04.2025**
(21) Anmeldenummer: 21706401.3
(22) Anmeldetag: 15.02.2021
(51) Int. Cl.: B65G 47/71, B65G 47/84, B65G 47/78

(54) **FÖRDERVORRICHTUNG FÜR VEREINZELTE ERZEUGNISSE**
CONVEYING APPARATUS FOR INDIVIDUALLY SEPARATED PRODUCTS
APPAREIL DE TRANSPORT POUR PRODUITS SÉPARÉS INDIVIDUELLEMENT

(30) Priorität: 17.02.2020 DE 102020104063
(43) Veröffentlichungstag der Anmeldung: 28.12.2022
(73) Patentinhaber: Romaco Kilian GmbH, 50735 Köln (DE)
(72) Erfinder: KOCK, Bernhard, 47443 Moers (DE); BAKSA, Martin, 51143 Köln (DE); KÜBLER, Roman, 47058 Duisburg (DE); STRERATH, Mark, 51545 Waldbröl (DE)
(74) Vertreter: Patentanwälte Buschhoff Hennicke Althaus
(86) Internationale Anmeldenummer: PCT/IB2021/051230
(87) Internationale Veröffentlichungsnummer: WO 2021/165807

(56) Entgegenhaltungen:
- EP-A1- 1 243 511
- EP-B1- 1 243 511
- DE-A1- 102016 109 228
- DE-A1- 3 000 575

## Beschreibung

Die Erfindung betrifft eine Fördervorrichtung für vereinzelte Erzeugnisse, insbesondere für mittels einer Tablettiervorrichtung hergestellte Tablettenerzeugnisse, nach dem Oberbegriff des Patentanspruchs 1.

Derartige Fördervorrichtungen kommen beispielsweise zum Einsatz für den Abtransport von in Rundläufertablettiermaschinen produzierten Tablettenerzeugnissen, die der Fördervorrichtung vom Matrizentisch der Tablettiermaschine zugeführt werden und dabei jeweils einzeln in den Aufnahmetaschen aufgenommen werden. Die Aufnahmetaschen befinden sich dabei im Allgemeinen am äußeren Umfangsbereich des beispielsweise als Förderstern ausgebildeten Förderorgans, der oberhalb des Gleitbodens angeordnet ist und von einem Antrieb drehend angetrieben wird und hierdurch die in den Aufnahmetaschen aufgenommenen Erzeugnisse über den Gleitboden auf einer Kreisbahn hin zu einer Abführeinrichtung fördert.

Zur Überwachung der Produktqualität von Tablettenerzeugnissen, wie sie mit der Erfindung gefördert werden können, ist es häufig gewünscht, einzelne Erzeugnisse möglichst unmittelbar nach ihrer Herstellung aus dem Transportweg auszuschleusen, um sie geeigneten Überprüfungsmaßnahmen unterziehen zu können. Die bei Tablettiermaschinen mittlerweile erreichte, hohe Produktionsgeschwindigkeit, die mehrere hundert Tablettenerzeugnisse pro Minute mittels einer Rundläufer-Tablettiermaschine erreicht, macht ein zuverlässiges Ausschleusen eines einzelnen Erzeugnisses schwierig, ohne dass die Gefahr besteht, dass dieses beim Ausschleusvorgang beschädigt wird.

Verschiedene Lösungsansätze für das Ausschleusen von einzelnen Tablettenerzeugnissen nach ihrer Produktion in einer Tablettenpresse wurden untersucht. Eine einfache Möglichkeit, einzelne Muster aus der Produktion zu ziehen, besteht darin, die Produktion kurzfristig still zu setzen und nach Öffnen eines einen Zugang verschaffenden Fensters durch dieses einzelne der produzierten Tabletten zu entnehmen. Ein derartiger Musterzug bei Stillstand der Anlage ist nicht mit Investitionskosten oder Anpassungen der Anlage verbunden und auch Beschädigungen der Tabletten werden üblicherweise vermieden. Offensichtlich ist diese Vorgehensweise aber zeitaufwendig und demgemäß mit einem nicht unerheblichen Verlust von Produktionsleistung verbunden.

Ein anderer Lösungsansatz besteht darin, bereits fertig verpackte Tabletten als Muster zu nutzen, einzelne Tabletten also gar nicht aus der Produktion auszuschleusen, sondern erst nach der kompletten Herstellung und Verpackung eine der Verpackungen wieder zu öffnen, um ein Muster für die durchzuführende Überprüfung zu erhalten. Auch bei dieser Vorgehensweise muss die Tablettieranlage nicht verändert werden und es kommt nicht zu Belastungen auf die Tablette durch den Ausschleusvorgang. Nachteilig ist allerdings, dass die Tablette erst den gesamten Weg ihrer Weiterverarbeitung nach ihrer eigentlichen Produktion (Transport, Verpackung) durchlaufen und dann wieder ausgepackt werden muss, wodurch nicht unerhebliche Zeit vergeht, bevor sie nach ihrer Herstellung überprüft werden kann. Sollten sich bei dieser Überprüfung Produktmängel herausstellen, können diese erst nach dieser Zeitverzögerung abgestellt werden.

Versuche, einzelne Tabletten mittels Druckluft aus dem Transportweg auszuschleusen, indem sie von Druckluftdüsen angeblasen und hierdurch aus ihrer üblichen Förderbahn heraus (seitlich) versetzt werden, haben verschiedene Nachteile dieser Vorgehensweise offenbart. Zum einen ist es erforderlich, für eine zuverlässige Druckluftversorgung zur Beaufschlagung der Druckluftdüsen zu sorgen, zum anderen müssen geeignete Anschlagführungen für die angeblasene Tablette vorgesehen werden, damit diese nicht unkontrolliert vom Transportband oder einem anderen Fördererorgan entfernt wird. Es kann leicht dazu kommen, dass die mittels Druckluft seitlich aus der Förderbahn geblasene Tablette bei ihrem Auftreffen an der Anschlagführung beschädigt wird und die anschließende Überprüfung, insbesondere die Feststellung ihres Gewichts dann ein fehlerhaftes (nämlich untergewichtiges) Erzeugnis ergibt, obwohl dieser Fehler nicht durch die Produktion der Tablette begründet ist, sondern erst beim Ausschleusen erfolgte.

Ähnliche Probleme treten auf beim Versuch, eine einzelne Muster-Tablette mittels Unterdruck oder mittels einer mechanischen Weiche auszuschleusen, mit der die Tablette seitlich in einen Muster-Entnahmekanal umgelenkt wird. Auch bei diesen Maßnahmen kann es leicht zu Beschädigungen des auszuschleusenden Erzeugnisses kommen.

Aus der EP 1 243 511 A1 ist eine Fördervorrichtung nach dem Oberbegriff des Anspruchs 1 bekannt. Insbesondere offenbart das Dokument eine Vorrichtung zur Bildung von Stapeln aus lagenweise angeordneten Gegenständen, die einer Station zum Zuführen der Lagen nachgeschaltet ist und die eine horizontale Träger- oder Auflagefläche und eine hinter dieser horizontalen Auflagefläche angeordnete und von dieser beabstandete erste Fläche aufweist, so dass ein Fenster entsteht, welches derart bemessen ist, dass eine Lage der Lagen von Gegenständen ungehindert durch das Fenster hindurch verlaufen kann.

Aus der DE 30 00 575 A1 ist ein Kettenförderer für grobkörniges Material, insbesondere für Pelletfutter, bekannt, mit einem Förderrohr und einer darin endlos umlaufenden, in Abstand den Rohrquerschnitt ausfüllende Förderscheiben tragenden Förderkette, die in einer Eingabestation eingebrachtes Material mitnimmt und es bei Bedarf an einer Vielzahl von Ausgabestationen durch Ausgabeöffnungen des Förderrohrs abgibt. Dabei umfasst jede Ausgabestation ein auf dem Förderrohr verschiebbar gelagertes Verschlussrohrstück, welches gegen die Wirkung eines es in die Verschlussstellung verspannenden Rückstellgliedes nach Maßgabe einer externen Steuerung oder des jeweiligen Bedarfs an der Ausgabestation in eine Öffnungsstellung bewegbar ist, in welcher ein unterseitiges Fenster des Verschlussrohrstücks mit der Ausgabeöffnung des Förderrohrs fluchtet.

Die DE 10 2016 109 228 A1 offenbart einen Weichenförderer zum Fördern von Stückgut und/oder Stückgutgruppen in einer Förderrichtung von zumindest einem Zuförderer wahlweise zu zumindest einem ersten Abförderer oder zumindest einem zweiten Abförderer.

Aufgabe der Erfindung ist es, eine Fördervorrichtung der gattungsgemäßen Art zu schaffen, mit der möglich ist, einzelne der mit der Fördervorrichtung transportierten Erzeugnisse zuverlässig aus dem Förderweg als Muster auszuschleusen, ohne sie dabei zu beschädigen.

Diese Aufgabe wird mit der Erfindung mit einer Fördervorrichtung mit der Merkmalen des Anspruchs 1 gelöst.

Mit der Erfindung wird zum Ausschleusen einzelner Erzeugnisse in dem Gleitboden der Fördervorrichtung, über den die Erzeugnisse transportiert werden, die Möglichkeit eines Abzugs nach unten geschaffen. Im regulären Transportbetrieb der Vorrichtung ist der Gleitboden auch im Bereich des Ausschleusabschnitts von dem geschlossenen Bodenbereich des Ausschleusbodens verschlossen. Zum Ausschleusen eines Erzeugnisses wird der Ausschleusboden bewegt, um den Ausschleusabschnitt freizugeben, indem der offene Durchlassbereich unter das auszuschleusende Erzeugnis gebracht wird. Durch die bei der Erfindung vorgesehene Bewegungsrichtung des Ausschleusbodens gleichlaufend zur Förderrichtung des Förderorgans wird sichergestellt, dass für die Öffnungs- und Schließbewegung ein möglichst großes Zeitintervall zur Verfügung steht, denn die den Durchlassbereich begrenzenden, in Bewegungsrichtung vorne und hinten liegenden Öffnungs- und Schließkanten des Ausschleusbodens bewegen sich zumindest im Wesentlichen in derselben Richtung wie der über den Gleitboden transportierte Tablettenstrom. Das jeweils auszuschleusende Erzeugnis hat daher ausreichend Zeit, nach unten durch den Gleitboden durch die in diesem temporär geschaffene Öffnung hindurchzufallen, beispielsweise auf eine dort vorgesehene Produktrutsche, auf der sie durch Schwerkraft getrieben weiterrutschen kann.

Bei der erfindungsgemäßen Ausgestaltung wird der Ausschleusboden von einer drehbar angetrieben Kreisscheibe mit mindestens einem den Durchlassbereich bildenden Bodenfenster gebildet. Die Drehung der Kreisscheibe erfolgt erfindungsgemäß in einer solchen Drehrichtung, dass das Bodenfenster, das zum Öffnen der Ausschleuseinrichtung unter das auszuschleusende Erzeugnis gebracht wird, sich zumindest im Wesentlichen in der gleichen Richtung bewegt wie dieses.

Der Ausschleusboden ist bevorzugt koplanar zum Gleitboden wenigstens zum Teil in der in diesem vorgesehenen Aussparung angeordnet, so dass zwischen dem Ausschleusboden und dem Gleitboden ein stufenloser Übergang gewährleistet ist, über den die darüber bewegten Erzeugnisse ohne Beschädigungen bewegt werden können.

Vorteilhaft ist es, wenn der Ausschleusboden mit einer Bewegungsgeschwindigkeit synchron zur Fördergeschwindigkeit des Förderorgans antreibbar ist. Hierdurch ist es möglich, die Relativgeschwindigkeit des Durchlassbereiches im Verhältnis zur Fördergeschwindigkeit der über den Gleitboden bewegten Erzeugnisse zu minimieren und somit die Zeit zu maximieren, während der die Ausschleuseinrichtung zum Abzug eines Erzeugnisses aus dem Erzeugnisstrom geöffnet ist.

In an sich bekannter Weise kann das Förderorgan ein drehend oberhalb des Gleitbodens angeordneter Förderstern sein, an dessen radial außen liegendem Umfangsbereich die Aufnahmetaschen ausgebildet sind. Der Ausschleusboden kann mittels eines Ausschleusantriebs antreibbar sein, der von einem Antrieb für das Förderorgan ableitbar ist. Dabei kann die Anordnung so getroffen sein, dass der Ausschleusantrieb mittels eines ein- und auskuppelbaren Getriebes mit dem Antrieb für das Förderorgan koppelbar ist. Es ist aber auch möglich, einen separaten, vom Förderorganantrieb unabhängigen Antrieb für den Ausschleusboden vorzusehen, beispielsweise einen Pneumatikantrieb oder einen Servomotor. Bei einer bevorzugten Ausführungsform der Erfindung wird der Antrieb für den Ausschleusboden mittels eines Pneumatikzylinders realisiert, der über ein Freilauf-Sperrgetriebe so mit dem Ausschleusboden gekoppelt ist, dass dieser bei einem vollständigen Arbeitshub des Zylinders um einen festgelegten, bestimmten Winkelbetrag, beispielsweise um 90° in der gewünschten Drehrichtung weitergeschaltet wird und beim Gegenhub des Zylinders in seiner Position verbleibt. Auf diese Weise kann durch mehrmaliges, insbesondere viermaliges Betätigen und Wieder-Zurückziehen des Pneumatikzylinders der Ausschleusboden in entsprechend vielen Schritten einmal vollständig gedreht und in wieder seine ursprüngliche Position gebracht werden, wobei jedes im Ausschleusboden vorgesehene Bodenfenster während dieser einen Umdrehung einmal zur Auschleusung eines Artikels in die Aussparung im Gleitboden gelangt und den Ausschleusabschnitt freigibt. Die Arbeitsgeschwindigkeit des Pneumatikzylinders, also die Geschwindigkeit, mit der dessen Kolbenstange aus- bzw. einfährt, ist dabei bevorzugt so an die Fördergeschwindigkeit angepasst, mit der die Erzeugnisse über den Gleitboden gefördert werden, dass sich der Ausschleusboden bzw. das darin ausgebildete Ausschleusfenster mit im Wesentlichen derselben Geschwindigkeit in zumindest näherungsweise derselben Richtung bewegt wie das auszuschleusende, vom Förderorgan bewegte Erzeugnis.

Die Ausschleuseinrichtung ist vorzugsweise mit einer unterhalb des Ausschleusabschnitts angeordneten Produktrutsche versehen, auf die ein Erzeugnis von oben gelangt, wenn sich der Ausschleusboden in seiner den Ausschleusabschnitt freigebenden Position befindet. Die Ausschleuseinrichtung ist zweckmäßig zwischen einer Zufuhreinrichtung für die Erzeugnisse auf den Gleitboden und einer Abführeinrichtung für die Erzeugnisse in Förderrichtung stromab von der Zufuhreinrichtung angeordnet. Dabei kann die Zufuhreinrichtung mindestens teilweise von einem Matrizentisch einer Tablettiervorrichtung gebildet werden. Die Abführeinrichtung wird vorzugsweise im Wesentlichen von einer im Gleitboden vorgesehenen Bodenöffnung gebildet, durch die die von dem Förderorgan über den Gleitboden bewegten Erzeugnisse am Ende ihres Förderwegs nach unten fallen können, beispielsweise auf ein sich anschließendes Förderband oder auf eine Abzugsrutsche.

Weitere Merkmale und Vorteile der Erfindung ergeben sich aus der Zeichnung und der nachfolgenden Beschreibung, wo eine bevorzugte Ausführungsform der Erfindung anhand eines Beispiels näher erläutert wird. Es zeigt:
- Fig. 1: eine Tablettieranlage mit einer erfindungsgemäßen Vorrichtung in einer vereinfachten, perspektivischen Darstellung;
- Fig. 2: den Gegenstand nach Fig. 1 unter Weglassung von Teilen der erfindungsgemäßen Vorrichtung mit geschlossenem Ausschleusabschnitt, in perspektivischer Darstellung;
- Fig. 3: den Gegenstand nach Fig. 1 mit offenem Ausschleusabschnitt; und
- Fig. 4: eine andere Ausführungsform der Tablettieranlage mit einem alternativen Antrieb für den Ausschleusboden der Ausschleuseinrichtung in einer Fig.1 entsprechenden Darstellung.

In den Figuren ist mit 10 eine Tablettieranlage bezeichnet, die zur Herstellung von Tablettenerzeugnissen, beispielsweise Waschmitteltabletten 11 eingesetzt wird. Die Anlage 10 umfasst eine Rundläufer-Tablettenpresse, wie sie zur Produktion von aus Pulver hergestellten Komprimaten im Stand der Technik bekannt ist. Da der Aufbau derartiger Tablettenpressen dem Fachmann geläufig ist, sind von der Tablettenpresse in den Zeichnungen lediglich eine Matrizenscheibe 12 sowie - exemplarisch - ein Matrizenstempelpaar mit Oberstempel 13 und Unterstempel 14 dargestellt. Die während eines Umlaufes der Matrizenscheibe 12 in Drehrichtung 15 von dem Matrizenstempelpaar jeweils in der zugeordneten Matrizenöffnung 16 gepressten Erzeugnisse 11 werden am Ende eines Umlaufes der Matrizenscheibe 12 vom jeweiligen Unterstempel 14 nach oben aus ihrer Matrizenöffnung 16 heraus gedrückt und an einer Zufuhreinrichtung 17 einer Fördervorrichtung übergeben, die Gegenstand der vorliegenden Erfindung ist.

Die insgesamt mit 18 bezeichnete Fördervorrichtung hat einen Gleitboden 19, dessen Oberseite sich auf demselben Niveau wie die Oberseite der Matritzenscheibe 12 befindet und der mit einer kreissegmentförmigen Begrenzungsfläche versehen ist, an der die Matrizenscheibe 12 im Bereich der Zufuhreinrichtung 17 entlang läuft. Dicht über dem Gleitboden 19 ist ein umlaufendes Förderorgan in Form eines Fördersterns 20 um eine vertikale Achse drehbar angeordnet. Der Förderstern 20 ist an seinem äußeren Umfang mit einer Vielzahl von radial nach außen vorstehenden Mitnehmerfingern 21 versehen, die zwischen sich Aufnahmetaschen 22 für die Erzeugnisse 11 bilden. Die Aufnahmetaschen 22 sind nach unten zum Gleitboden 19 hin offen, so dass die Erzeugnisse 11, die von der Matrizenscheibe 12 übernommen werden, in einer kreisförmigen Förderbahn 23 in einer Förderrichtung 24 ausgehend von der Zufuhreinrichtung 17 über einen Winkelbereich von etwa 180° hin zu einer Abfuhreinrichtung 25 über den Gleitboden 19 der Vorrichtung 18 geschoben werden. Man erkennt, dass die Mitnehmerfinger 21 im Bereich der Zufuhreinrichtung 17 seitlich über die dort kreissegmentförmig eingezogene Begrenzungsfläche bis über die Oberseite der Matrizenscheibe ragen und hierdurch die Erzeugnisse von dieser übernehmen können. Die seitliche Führung der Tablettenerzeugnisse 11 entlang der Förderbahn 23 an der Außenseite der umfangseitig offenen Aufnahmetaschen 22 erfolgt durch eine feststehende, kreissegmentförmige Führungsschiene 26, die sich von der Zufuhreinrichtung 17 bis hin zur Abfuhreinrichtung 25 erstreckt und die die kreisbogenförmige Förderbahn 23 außenseitig begrenzt.

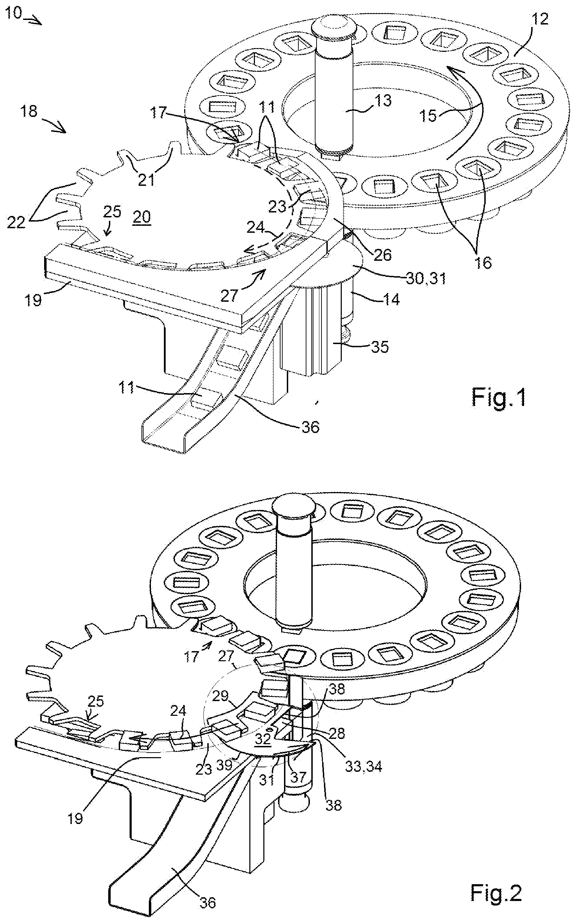

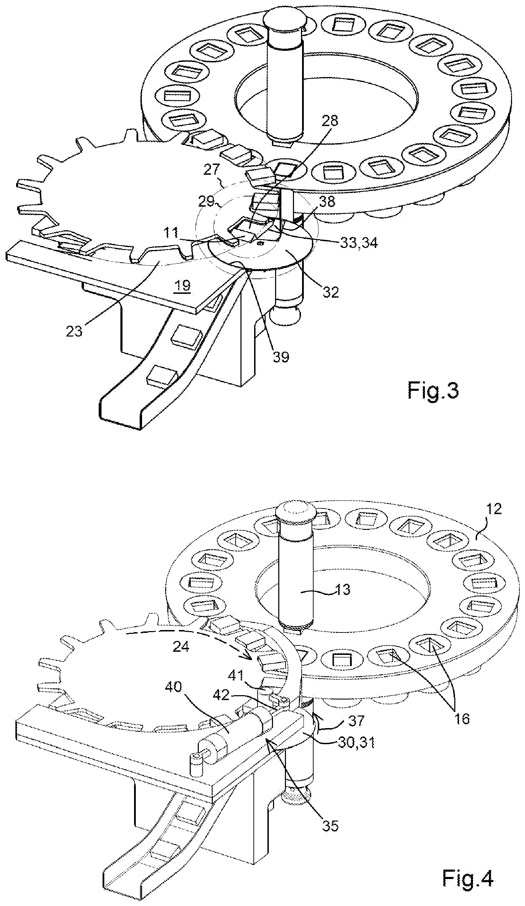

Etwa auf halbem Weg zwischen der Zufuhreinrichtung 17 und der Abfuhreinrichtung 25 ist die Vorrichtung 18 mit einer Ausschleuseinrichtung 27 versehen, mit der einzelne oder mehrere der Erzeugnisse 11 aus der Förderbahn 23 ausgeschleust werden können, um sie beispielsweise als Produktmuster überprüfen zu können. Die Ausschleuseinrichtung 27 ist in den Fig. 2 und 3 am besten zu erkennen, in denen die kreissegmentförmige Führungsschiene 26 nicht mit dargestellt ist.

Wie man sieht, umfasst die Ausschleuseinrichtung 27 eine im Gleitboden 19 vorgesehene Aussparung 28 in einem Ausschleusabschnitt 29 der Förderbahn 23 und einem der Aussparung 28 zugeordneten, beweglichen Ausschleusboden 30, der erfindungsgemäß von einer drehbar angetriebenen Kreisscheibe 31 gebildet wird. Diese hat einen sich über einen Umfangswinkel von etwa 270° erstreckenden, geschlossenen Bodenbereich 32 zum Verschließen des Ausschleusabschnitts 29 und einen offenen Durchlassbereich 33 in Form eines Bodenfensters 34, mit dem der Ausschleusabschnitt freigegeben werden kann. Mit einem mit dem Ausschleusboden 30 gekoppelten Antrieb 35 kann die Kreisscheibe um eine vertikale Achse verdreht werden. Dieser Antrieb besteht bei der in Fig. 1 dargestellten Ausführungsform aus einem unterhalb des Ausschleusbodens angeordneten Servo-Stellmotor, an dessen Ausgangswelle die den Ausschleusboden bildende Kreisscheibe entweder direkt oder unter Zwischenschaltung eines Getriebes angeflanscht ist. Bei dem in Fig. 4 gezeigten Ausführungsbeispiel wird der Antrieb für den Ausschleusboden im Wesentlichen von einem Pneumatikzylinder 40 gebildet, der über ein mit der Drehwelle des Ausschleusbodens 30 gekoppeltes, (vereinfacht dargestelltes) Rastschaltgetriebe 41 den Auschleusboden immer um eine Viertel Umdrehung weiterschaltet, wenn seine Kolbenstange 42 bei Betätigung des Zylinders ausfährt. Der im Rastschaltgetriebe vorgesehene, nicht näher dargestellte Rastmechanismus stellt sicher, dass der Ausschleusboden beim Zurückziehen der Kolbenstange seine Position beibehält, also nicht wieder zurückgedreht wird. Die hin- und hergehende Bewegung der Kolbenstange des Zylinders wird also in eine Drehschaltbewegung des Ausschleusbodens in einer Drehrichtung umgesetzt, wobei bei dem gezeigten Ausführungsbeispiel vier aufeinander folgende, vollständige Arbeitshübe des Pneumatikzylinders eine vollständige Umdrehung des Ausschleusbodens zurück in seiner Ausgangsposition bewirken.

Mittels des Antriebs 35 wird entweder der geschlossene Bodenbereich 32 des Ausschleusbodens 30 in der Aussparung 28 angeordnet, um hierdurch den Ausschleusabschnitt 29 zu verschließen, oder der offene Durchlassbereich 33 wird in die Aussparung 28 gebracht, um hierdurch den Ausschleusabschnitt 29 zu öffnen, so dass ein diesen auf der Förderbahn 23 erreichendes Erzeugnis 11 dann nach unten auf eine unterhalb des Ausschleusabschnitts 29 beginnende Abzugsrutsche 36 gelangt, mit der es aus der Fördervorrichtung 18 ausgeschleust wird. Die Bewegungsrichtung des Ausschleusbodens 30 im Bereich der Aussparung 28, also in den Ausführungsbeispielen die Umfangsrichtung 37 der Kreisscheibe 31 unterhalb der Aussparungen im Förderstern, zum wahlweisen Verschließen oder Freigeben des Ausschleusabschnitts 29 ist gemäß der Erfindung im Wesentlichen gleichlaufend zur Förderrichtung 24 des Förderorgans 20. Diese besondere Ausgestaltung hat den Vorteil, dass bei der Drehung der Kreisscheibe die das Bodenfenster 34 in Umfangsrichtung vorne und hinten begrenzenden, im Wesentlichen radial verlaufenden vorderen und hinteren Fensterkanten 38 sich nicht entgegen der Förderrichtung 24 der Tabletten 11 bewegen, sondern in im wesentlichen dieselbe Richtung wie diese, so dass es nicht dazu kommt, dass die an der Ausschleuseinrichtung 27 aus der Fördervorrichtung 18 abzuziehende Tablette zwischen den Mitnehmerfingern 21 des Fördersterns 20 bzw. den Kanten der Aussparung 28 und den Fensterkanten 38 des Bodenfensters 34 im Ausschleusboden 30 eingeklemmt und hierdurch beschädigt werden kann.

Man kann in den Fig. 2 und 3 gut erkennen, dass der Ausschleusboden 30 koplanar zum Gleitboden 19 angeordnet ist, sich die Oberseite seines Bodenbereiches also auf derselben Höhe wie die Oberseite des Gleitbodens befindet. Im in Fig.2 gezeigten, geschlossenen Zustand der Ausschleuseinrichtung, in der sich der Bodenbereich 32 in der Aussparung 28 im Gleitboden 19 befindet, werden die Erzeugnisse 11 vom Förderstern 20 somit stufenlos über den engen Spalt 39 zwischen Gleit- und Ausschleusboden bewegt. Die Aussparung 28 im Gleitboden hat ungefähr die Form eines Halbkreises, der von der den Ausschleusboden 30 bildenden Kreisscheibe 31 im Schließzustand der Ausschleuseinrichtung 27 im Wesentlichen vollständig unter Bildung des nur sehr engen Spalts 39 ausgefüllt wird. Der Ausschleusboden 30 kann von dem Servomotor 35 bzw. dem Pneumatizylinderantrieb 40,41 mit einer Bewegungsgeschwindigkeit synchron zur Fördergeschwindigkeit des Fördersterns 20 verdreht bzw. weitergeschaltet werden, um auf diese Weise in der Aussparung 28 das Bodenfenster 34 der Kreisscheibe 31 zu platzieren (Fig.3) und hierdurch den Ausschleusabschnitt 29 für ein Erzeugnis zu öffnen, das dann nach unten auf die Abzugsrutsche 36 gelangt und so aus dem regulären Förderweg abgezogen wird. Es versteht sich, dass es auch möglich ist, mehrere Erzeugnisse, beispielsweise als Musterreihe, abzuziehen, wozu es - insbesondere bei der Ausführungsform gemäß Fig. 4 - möglich ist, entweder den Ausschleusboden über entsprechend längere Zeit in seiner Öffnungsstellung zu halten, so dass entsprechend mehrere, unmittelbar aufeinander folgende Erzeugnisse abgezogen werden, oder - speziell mit der Ausführungsform gemäß Fig. 1 - den Ausschleusboden über mehrere Umdrehungen mit einer an die Fördergeschwindigkeit des Fördersterns angepassten Rotationsgeschwindigkeit zu drehen, derart, dass das Bodenfenster bei jeder Umdrehung des Ausschleusbodens unterhalb eines in einer Aufnahmetasche aufgenommenen Erzeugnisses gelangt und dann beispielsweise jedes zweite, dritte oder n-te der in den benachbarten Aufnahmetaschen befindlichen Erzeugnisse aus der regulären Förderbahn zwischen der Zufuhr- und der Abfuhreinrichtung bereits an der Ausschleuseinrichtung abgezogen wird.

Natürlich lassen sich bei entsprechend anderer Gestaltung der Ausschleuseinrichtung und insbesondere deren Ausschleusbodens auch andere Arten eines Musterzugs verwirklichen. Der Ausschleusboden kann zum Beispiel auch mit mehreren Bodenfenstern versehen sein, die sich gleichmäßig mit entsprechend großen, geschlossenen Bodenbereichen abwechseln. Eine solche Gestaltung kann sich dann anbieten, wenn vorgesehen sein soll, dass z.B. regelmäßig jedes zweite der in der Tablettiermaschine hergestellten Erzeugnisse an andere Stelle umgeleitet werden soll.

## Patentansprüche

1. Fördervorrichtung für vereinzelte Erzeugnisse, insbesondere für mittels einer Tablettiervorrichtung hergestellte Tablettenerzeugnisse, mit einem Gleitboden (19) und einem über dem Gleitboden laufenden Förderorgan (20) mit einer Vielzahl von zum darunter gelegenen Gleitboden (19) offenen Aufnahmetaschen (22) für die vereinzelten Erzeugnisse (11), die von dem Förderorgan (20) in einer Förderrichtung (24) entlang einer Förderbahn (23) über den Gleitboden (19) bewegbar sind, aufweisend eine Ausschleuseinrichtung (27) mit einer im Gleitboden (19) vorgesehenen, einen Ausschleusabschnitt (29) der Förderbahn (23) umfassenden Aussparung (28) und einem der Aussparung (28) zugeordneten, beweglichen Ausschleusboden (30) mit mindestens einem geschlossenen Bodenbereich (32) zum Verschließen des Ausschleusabschnitts (29) und mindestens einem offenen Durchlassbereich (33) zum Freigeben des Ausschleusabschnitts (29), wobei die Bewegungsrichtung (37) des Ausschleusbodens (30) zum wahlweisen Verschließen oder Freigeben des Ausschleusabschnitts (29) im Wesentlichen gleichlaufend zur Förderrichtung (24) des Förderorgans (20) ist, **dadurch gekennzeichnet, dass** der Ausschleusboden (30) von einer drehbar angetriebenen Kreisscheibe (31) mit mindestens einem den Durchlassbereich (33) bildenden Bodenfenster (34) gebildet wird.

2. Fördervorrichtung nach Anspruch 1, **dadurch gekennzeichnet, dass** der Ausschleusboden (30) koplanar zum Gleitboden (19) wenigstens zum Teil in der in diesem vorgesehenen Aussparung (28) angeordnet ist.

3. Fördervorrichtung nach Anspruch 1 oder 2, **dadurch gekennzeichnet, dass** der Ausschleusboden (30) mit einer Bewegungsgeschwindigkeit synchron zur Fördergeschwindigkeit des Förderorgans (20) antreibbar ist.

4. Fördervorrichtung nach einem der Ansprüche 1 bis 3, **dadurch gekennzeichnet, dass** das Förderorgan ein drehend oberhalb des Gleitbodens (19) angeordneter Förderstern (20) ist, an dessen radial außen liegendem Umfangsbereich die Aufnahmetaschen (22) ausgebildet sind.

5. Fördervorrichtung nach einem der Ansprüche 1 bis 4, **dadurch gekennzeichnet, dass** der Ausschleusboden (30) mittels eines Ausschleusantriebs antreibbar ist, der von einem Antrieb für das Förderorgan (20) ableitbar ist.

6. Fördervorrichtung nach Anspruch 5, **dadurch gekennzeichnet, dass** der Ausschleusantrieb mittels eines ein- und auskuppelbaren Getriebes mit dem Antrieb für das Förderorgan koppelbar ist.

7. Fördervorrichtung nach einem der Ansprüche 1 bis 6, **dadurch gekennzeichnet, dass** die Ausschleuseinrichtung (27) mit einer unterhalb des Ausschleusabschnitts (29) angeordneten Abzugsrutsche (36) versehen ist.

8. Fördervorrichtung nach einem der Ansprüche 1 bis 7, **dadurch gekennzeichnet, dass** die Ausschleuseinrichtung (27) zwischen einer Zufuhreinrichtung (17) für die Erzeugnisse (11) auf den Gleitboden (19) und einer Abführeinrichtung (25) für die Erzeugnisse in Förderrichtung (24) stromab von der Zufuhreinrichtung (17) angeordnet ist.

9. Fördervorrichtung nach Anspruch 8, **dadurch gekennzeichnet, dass** die Zufuhreinrichtung (17) mindestens teilweise von einem Matrizentisch (12) einer Tablettiervorrichtung gebildet wird.

10. Fördervorrichtung nach Anspruch 8 oder 9, **dadurch gekennzeichnet, dass** die Abführeinrichtung (25) im Wesentlichen von einer im Gleitboden (19) vorgesehenen Bodenöffnung gebildet wird.

## Claims

1. Conveying apparatus for separated products, in particular for tablet products manufactured by means of a tabletting apparatus, having a sliding bottom (19) and a conveying member (20) running over the sliding bottom, with a plurality of receiving pockets (22) open to the sliding bottom (19) below for the separated products (11) which can be moved by the conveying member (20) in a conveying direction (24) along a conveying track (23) over the sliding floor (19), comprising an ejection device (27) having a recess (28) provided in the sliding floor (19) and comprising an ejection portion (29) of the conveying track (23), and comprising a movable ejection floor (30), assigned to the recess (28), with at least one closed bottom area (32) for closing the ejection portion (29) and at least one open passage region (33) for opening the ejection portion (29), wherein the direction of movement (37) of the ejection floor (30) for optionally closing or opening the ejection portion (29) is substantially identical to the conveying direction (24) of the conveyor (20), **characterized in that** the ejection floor (30) is formed by a rotatably driven circular disc (31) with at least one floor window (34) forming the passage region (33).

2. Conveying apparatus according to Claim 1, **characterized in that** the ejection floor (30) is arranged coplanar with respect to the sliding floor (19) at least partially in the recess (28) provided in the latter.

3. Conveying apparatus according to Claim 1 or 2, **characterized in that** the ejection floor (30) is drivable with a movement speed synchronously with respect to the conveying speed of the conveying member (20).

4. Conveying apparatus according to one of Claims 1 to 3, **characterized in that** the conveying member is a conveyor star (20) which is rotationally arranged above the sliding bottom (19) and on the radially outer circumferential region of which the receiving pockets (22) are formed.

5. Conveying apparatus according to one of Claims 1 to 4, **characterized in that** the ejection floor (30) is drivable by means of an ejection drive which can be diverted from a drive for the conveying member (20).

6. Conveying apparatus according to Claim 5, **characterized in that** the ejection drive can be coupled to the drive for the conveying member by means of a gear mechanism which can be engaged and disengaged.

7. Conveying apparatus according to one of Claims 1 to 6, **characterized in that** the ejection device (27) is provided with a discharge chute (36) arranged below the ejection portion (29).

8. Conveying apparatus according to one of Claims 1 to 7, **characterized in that** the ejection device (27) is arranged between a feed device (17) for feeding the products (11) onto the sliding floor (19) and a discharge device (25) for the products downstream of the feed device (17) in the conveying direction (24).

9. Conveying apparatus according to Claim 8, **characterized in that** the feed device (17) is formed at least partially by a die table (12) of a tabletting apparatus.

10. Conveying apparatus according to Claim 8 or 9, **characterized in that** the discharge device (25) is substantially formed by a bottom opening provided in the sliding floor (19).

## Revendications

1. Dispositif de transport destiné à des produits individuellement séparés, notamment des produits sous forme de pastilles fabriqués au moyen d'un dispositif de pastillage, comprenant une base coulissante (19) et un organe de transport (20) se déplaçant au-dessus de la base coulissante et présentant une pluralité de cases de réception (22) destinées aux produits individuellement séparés (11) et ouvertes par rapport à la base coulissante (19) située en dessous, lesquels produits peuvent être déplacés par l'organe de transport (20) dans une direction de transport (24) le long d'un trajet de transport (23) sur la base coulissante (19), comportant un dispositif d'éjection (27) ayant une ouverture (28) prévue dans la base coulissante (19) et comprenant une partie d'éjection (29) du chemin de transport (23) et une base d'éjection mobile (30) associée à l'ouverture (28) et ayant au moins une zone de base fermée (32) destinée à fermer la partie d'éjection (29) et au moins une zone de passage traversante (33) ouverte destinée à libérer la partie d'éjection (29), la direction de déplacement (37) de la base d'éjection (30) pour fermer ou libérer éventuellement la partie d'éjection (29) étant sensiblement identique à la direction de transport (24) de l'organe de transport (20), **caractérisé en ce que** la base d'éjection (30) est formée par un disque circulaire entraîné en rotation (31) et présentant au moins une fenêtre de base (34) formant la zone de passage traversante (33).

2. Dispositif de transport selon la revendication 1, **caractérisé en ce que** la base d'éjection (30) est disposée de manière coplanaire par rapport à la base coulissante (19), au moins en partie dans l'ouverture (28) prévue dans celle-ci.

3. Dispositif de transport selon la revendication 1 ou 2, **caractérisé en ce que** la base d'éjection (30) peut être entraînée à une vitesse de déplacement synchrone de la vitesse de transport de l'organe de transport (20).

4. Dispositif de transport selon l'une quelconque des revendications 1 à 3, **caractérisé en ce que** l'organe de transport est une étoile de transport (20) disposée de manière rotative au-dessus de la base coulissante (19), sur la zone périphérique radialement extérieure de laquelle sont réalisées les cases de réception (22).

5. Dispositif de transport selon l'une quelconque des revendications 1 à 4, **caractérisé en ce que** la base d'éjection (30) peut être entraînée au moyen d'un mécanisme d'éjection qui peut être dérivé d'un mécanisme d'entraînement destiné à l'organe de transport (20).

6. Dispositif de transport selon la revendication 5, **caractérisé en ce que** le mécanisme d'éjection peut être accouplé au mécanisme d'entraînement de l'organe de transport au moyen d'un système de transmission pouvant être embrayé et débrayé.

7. Dispositif de transport selon l'une quelconque des revendications 1 à 6, **caractérisé en ce que** le dispositif d'éjection (27) est pourvu d'une goulotte d'éjection (36) disposée en dessous de la partie d'éjection (29).

8. Dispositif de transport selon l'une quelconque des revendications 1 à 7, **caractérisé en ce que** le dispositif d'éjection (27) est disposé entre un dispositif d'amenée (17) destiné aux produits (11) sur la base coulissante (19) et un dispositif d'évacuation (25) destiné aux produits dans la direction de transport (24) en aval du dispositif d'amenée (17).

9. Dispositif de transport selon la revendication 8, **caractérisé en ce que** le dispositif d'amenée (17) est formé, au moins en partie, par une table à matrice (12) d'un dispositif de pastillage.

10. Dispositif de transport selon la revendication 8 ou 9, **caractérisé en ce que** le dispositif d'éjection (25) est formé, pour l'essentiel, par une ouverture de base prévue dans la base coulissante (19).
